# EUROPÄISCHE PATENTSCHRIFT

(11) **EP 3 569 747 B1**
(45) Veröffentlichungstag und Bekanntmachung des Hinweises auf die Patenterteilung: **20.01.2021**
(21) Anmeldenummer: 19168558.5
(22) Anmeldetag: 11.04.2019
(51) Int. Cl.: D02G 3/48, B29D 30/38, B60C 9/00

(54) **CORD ZUR VERWENDUNG ALS FESTIGKEITSTRÄGER IN EINER FESTIGKEITSTRÄGERLAGE, UMFASSEND ZUMINDEST EIN ERSTES GARN UND EIN ZWEITES GARN, WOBEI DER ERSTE UND DAS ZWEITE GARN MITEINANDER ENDVERDREHT SIND, DESSEN VERWENDUNG ZUM MESSEN UND EIN HYBRIDCORD, EINE FESTIGKEITSTRÄGERLAGE, FAHRZEUGLUFTREIFEN SOWIE VERFAHREN ZUR HERSTELLUNG**
CORD FOR USE AS A SUPPORT IN A STABILITY SUPPORT LAYER COMPRISING AT LEAST A FIRST AND A SECOND YARN, WHERE THE FIRST AND SECOND YARN ARE TWISTED TOGETHER AT THE END, ITS USE FOR MEASURING AND A HYBRID CORD, A STABILITY SUPPORT LAYER, VEHICLE TYRE AND METHOD FOR THE PRODUCTION THEREOF
CORDON, DESTINÉ À ÊTRE UTILISÉ EN TANT QUE SUPPORT DE RENFORCEMENT DANS UN EMPLACEMENT DE SUPPORT DE RENFORCEMENT, COMPRENANT AU MOINS UN PREMIER FIL ET UN SECOND FIL, LE PREMIER ET LE SECOND FILS ÉTANT TORSADÉS L'UN AVEC L'AUTRE, SON UTILISATION POUR MESURER ET CORDON HYBRIDE, EMPLACEMENT DE SUPPORT DE RENFORCEMENT, PNEUS DE VÉHICULE AINSI QUE PROCÉDÉ DE FABRICATION

(30) Priorität: 17.05.2018 DE 102018207736
(43) Veröffentlichungstag der Anmeldung: 20.11.2019
(73) Patentinhaber: Continental Reifen Deutschland GmbH, 30165 Hannover (DE)
(72) Erfinder: Lacayo-Pineda, Jorge, 30165 Hannover (DE)
(74) Vertreter: Finger, Karsten

(56) Entgegenhaltungen:
- DE-A1-102007 005 281
- DE-A1-102010 037 328

## Beschreibung

Die Erfindung betrifft einen Cord zur Verwendung als Festigkeitsträger in einer Festigkeitsträgerlage, insbesondere einer Gürtelbandage und/oder Karkasse eines Fahrzeugluftreifens, umfassend zumindest ein erstes Garn und ein zweites Garn, wobei der erste und das zweite Garn miteinander endverdreht sind. Die Erfindung betrifft auch eine Festigkeitsträgerlage, Fahrzeugluftreifen, Transportbänder, Luftfederbälge, Antriebsriemen und Schläuche jeweils umfassend den Cord sowie die Verwendung des Cords zum Messen. Auch betrifft die Erfindung ein Verfahren zum Messen und ein Verfahren zur Herstellung des Cordes.

Corde als Festigkeitsträger, die ihre Anwendung in Fahrzeugluftreifen finden und aus zwei unterschiedlichen Garnen endverdreht sind, werden z.B. in der DE 10 2010 037 328 A1 und DE 10 2007 005 281 A1 erwähnt.

In jüngster Zeit gewinnen in Reifen eingebaute Sensoren zunehmend an Bedeutung. Die in Reifen eingebaute Sensoren sollen dabei nicht mehr nur den Luftdruck des Reifens während des Fahrens messen, sondern auch andere Reifeneigenschaften, wie den Rollwiderstand, den Reibwiderstand oder den Abrieb. Dazu ist es nötig neuartige Sensorkonzepte zu entwickeln, welche die gewünschten Eigenschaften messen können und/oder keine Nachteile mit sich bringen. Solche Nachteile können beispielsweise Unwuchten im Reifen sein, welche durch den zusätzlichen Einbau eines Sensors in den Reifen entstehen.

Eine Aufgabe, die der Erfindung zugrunde liegt, besteht darin, einen Cord zur Verwendung als Festigkeitsträger in einer Festigkeitsträgerlage bereitzustellen, welche verschiedene Reifeneigenschaften, insbesondere den Rollwiderstand, den Reibwiderstand oder den Abrieb, messen kann.

Gelöst wird diese Aufgabe erfindungsgemäß durch einen Cord zur Verwendung als Festigkeitsträger in einer Festigkeitsträgerlage, insbesondere einer Gürtelbandage und/oder Karkasse eines Fahrzeugluftreifens, umfassend zumindest ein erstes Garn und ein zweites Garn, wobei der erste und das zweite Garn miteinander endverdreht sind,
dadurch gekennzeichnet, dass
- zumindest ein Filament des ersten Garns des Cordes, eine Mehrheit der Filamente des ersten Garns oder sämtliche Filamente des ersten Garns aus Polyvinylidenfluorid bestehen
   und
- die Oberfläche zumindest des ersten Garns und des zweiten Garns zumindest teilweise von eine haftvermittelnde Schicht bestehend aus einer Dispersion bedeckt ist, wobei die Dispersion mindestens eine Dispersionsmatrix und mindestens eine dispergierte Phase umfasst.

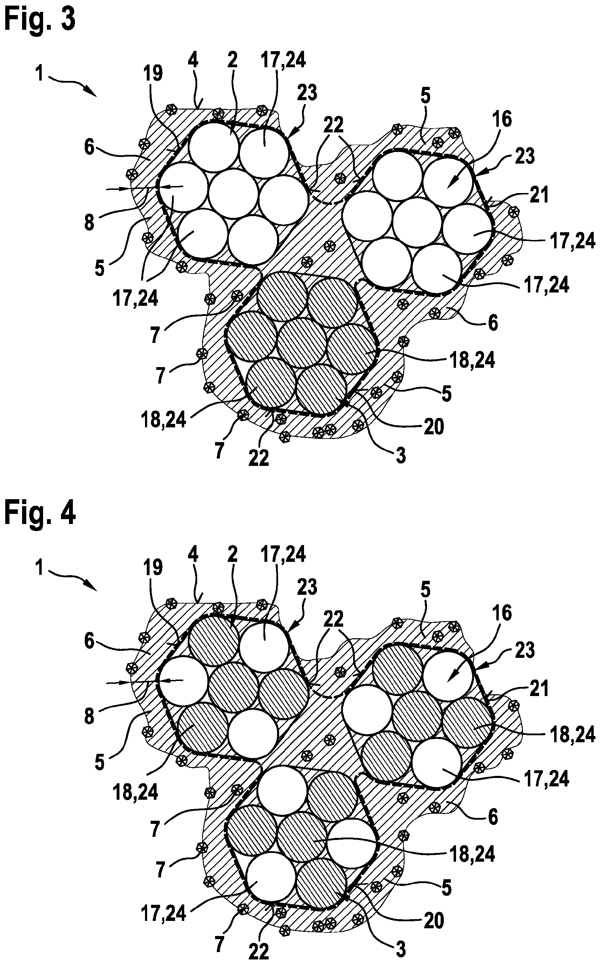

Es war eine hervorragende Leistung der vorliegenden Erfindung, erkannt zu haben, dass die Verwendung eines Filamenten oder eines Garns aus Polyvinylidenfluorid, kurz: PVDF, mit der vorstehend beschriebenen haftvermittelnden Schicht in einem Reifen verwendet werden kann, um verschiedene Reifeneigenschaften, insbesondere den Rollwiderstand, den Reibwiderstand oder den Abrieb, zu messen. Ohne an eine wissenschaftliche Theorie gebunden sein zu wollen, wurde entdeckt dass bei den gewöhnlichen Deformationen eines Festigkeitsträgers in einem Reifen PVDF einen ausreichend großen Piezo-ähnlichen Effekt aufweist, um ein elektrisches Signal zu erhalten. Zu diesen gewöhnlichen Deformationen eines Festigkeitsträgers in einem Reifen gehört beispielsweise die mechanische Spannung eines Festigkeitsträgers, welche sich proportional zum Innenluftdruck des Reifens verändert oder auch die dynamischen und entweder gedämpften oder ungedämpften Schwingungen eines Festigkeitsträgers, welche beim Rollen eines Reifens auftreten. Aus den vorstehend beschriebenen Schwingungen kann es möglich sein, den Abrieb bzw. den Reibwidersand und/oder den Rollwiderstand eines Fahrzeugluftreifens während des Fahrbetriebs zu kontrollieren. Für eine ausreichende Übertragung der mechanischen Kräfte von dem die Fahrbahnoberfläche kontaktierenden Laufstreifen auf ein vorstehend beschriebenen Garn in einem erfindungsgemäßen Fahrzeugluftreifen, ist es wichtig, dass das Garn zumindest teilweise mit einer haftvermittelnden Schicht wie vorstehend beschrieben überzogen wird. Im Rahmen der vorliegenden Erfindung sollte die Oberfläche der Filamente des ersten Garns zumindest teilweise mit einer vorstehend beschriebenen haftvermittelnden Schicht bedeckt sein. Umfasst auch das zweite Garn PVDF, so ist es vorteilhaft, wenn auch der die Oberfläche des zweiten Garns zumindest teilweise mit einer haftvermittelnden Schicht bedeckt ist. Besonders bevorzugt sind die Oberflächen sämtlicher Garne eines erfindungsgemäßen Cord zumindest teilweise mit der vorstehend beschriebenen haftvermittelnden Schicht bedeckt. Ausreichend ist es auch, wenn zumindest die mittlere äußere Oberfläche sämtlicher Garne des erfindungsmäßen Cordes von der vorstehend oder nachstehend beschriebenen haftvermittelnden Schicht bedeckt ist. Im Rahmen der vorliegenden Erfindung ist die mittlere äußere Oberfläche sämtlicher Garne eines erfindungsmäßen Cordes die von der Mitte eines erfindungsgemäßen Cordes aus ausliegenden Oberflächen der Filamente der Garne des erfindungsmäßen Cordes, wie sie beispielsweise in Figur 3 und Figur 4 dargestellt ist.

Bevorzugt ist auch ein Cord wie vorstehend beschrieben, wobei die Dispersion genau eine Dispersionsmatrix und genau eine dispergierte Phase umfasst oder wobei besonders bevorzugt die Dispersion aus genau einer Dispersionsmatrix und genau einer dispergierte Phase besteht.

Bevorzugt ist auch ein Cord wie vorstehend beschrieben, wobei ein Filament des ersten Garns des Cordes, eine Mehrheit der Filamente des ersten Garns oder sämtliche Filamente des ersten Garns aus einem anderen Piezo-Material als Polyvinylidenfluorid bestehen oder solche Stoffe umfassen. Solche anderen Piezo-Materialen sind beispielsweise Polyvinylidenchlorid, Blei-Zirkonat-Titanat (PZT), Bariumtitanat, Polyvinylchlorid und Polyvinylfluorid.

Bevorzugt ist ein Cord wie vorstehend beschrieben oder wie vorstehend als bevorzugt beschrieben, wobei die haftvermittelnde Schicht eine Schichtdicke im Bereich von 10 nm bis 1 mm aufweist, bevorzugt im Bereich von 100 nm bis 100 µm, besonders bevorzugt im Bereich von 1 µm bis 10 µm.

Der Vorteil der vorstehend beschriebenen Bereiche der Schicht dicken der haftvermittelnden Schicht ist, dass sie ein Optimum zwischen der Steifigkeit der Corde und einer ausreichenden Kraftübertragung zwischen dem Laufstreifen und dem Cord darstellen.

Bevorzugt ist ein Cord wie vorstehend beschrieben oder wie vorstehend als bevorzugt beschrieben, wobei die haftvermittelnde Schicht zumindest die Hälfte der Oberfläche des ersten und zweiten Garns bedeckt, bevorzugt zumindest 90 % der Oberfläche des ersten und des zweiten Garns.

Der vorstehend beschriebene Aspekt der vorliegenden Erfindung ist, dass diese Oberflächenbedeckungen ein Optimum zwischen der Steifigkeit der Corde und einer ausreichenden Kraftübertragung zwischen dem Laufstreifen und dem Cord darstellen.

Im Rahmen der vorliegenden Erfindung umfasst die Oberfläche sämtlicher Filamente eines Garns auch die Oberfläche des besagten Garns. Im Rahmen der vorliegenden Erfindung ist die Oberfläche eines Garns bevorzugt die von der Mitte eines Garns aus ausliegenden Oberflächen der Filamente des besagten Garns.

Bevorzugt ist ein Cord wie vorstehend beschrieben oder wie vorstehend als bevorzugt beschrieben, wobei die Dispersionsmatrix Resorcin-Formaldehyd und/oder die dispergierte Phase Kautschuklatex umfasst.
Eine haftvermittelnde Schicht eines erfindungsgemäßen Cordes wie vorstehend beschrieben kann überraschenderweise mit den üblicherweise eingesetzten so genannten RFL-Dips hergestellt werden. Der Fachmann hätte nicht erwartet, dass die vorstehend beschriebene Dispersionsmatrix so gut an PVDF-Oberflächen halten, dass der erfindungsgemäße Cord zur Messung der vorstehend beschriebenen Reifeneigenschaften geeignet ist.

Bevorzugt ist es, wenn die Dispersionsmatrix hauptsächlich oder gänzlich aus Resorcin-Formaldehyd besteht und/oder die dispergierte Phase hauptsächlich oder gänzlich aus Kautschuklatex besteht, bevorzugt aus Kautschuklatex-Partikeln.
Die dispergierte Phase die dabei bevorzugt in Form von im Wesentlichen rundlichen Partikeln aus Kautschuklatex vor, wobei sie bevorzugt dazu geeignet sind, für eine möglichst gute Haftung zwischen der haftvermittelnden Schicht eines erfindungsgemäßen Cordes und der den Cord umgebenden Gummikomponenten zu garantieren.
Bevorzugt ist ein Cord wie vorstehend beschrieben oder wie vorstehend als bevorzugt beschrieben, dadurch gekennzeichnet, dass die Kautschuklatex-Partikel eine mittlere Partikelgröße im Bereich von 0,3 bis 30 mm aufweisen, bevorzugt im Bereich von 0,425 bis 20 mm, besonders bevorzugt im Bereich von 0,7 bis 2,5 mm. Die Bestimmung wird vorzugsweise mit einer Schüttelzeit von 5 Minuten und mit Sieben, welche Maschenweiten von 0,2 mm, 0,4 mm, 0,6 mm, 0,8 mm, 1 mm, 1,5 mm, 2 mm, 3 mm, 5 mm, 15 mm, 25 mm und 35 mm durchgeführt (entsprechend wären gemäß der weiter unten diskutierten Messmethode d₁ = 0,1 mm, d₂ = 0,3 mm, d₃ = 0,5 mm usw. bis d₁₀ = 20 mm und d₁₁ = 30 mm).

Ganz besonders bevorzugt ist ein Cord wie vorstehend beschrieben (oder wie vorstehend als bevorzugt beschrieben), dadurch gekennzeichnet, dass die Kautschuklatex-Partikel
- eine mittlere Partikelgröße im Bereich von 0,3 bis 30 mm aufweisen, wobei einzelne Kautschuklatex-Partikel nicht größer als 500 mm sind, bevorzugt nicht größer als 100 mm,
- besonders bevorzugt eine mittlere Partikelgröße im Bereich von 0,425 bis 20 mm aufweisen, wobei einzelne Kautschuklatex-Partikel nicht größer als 30 mm sind,
- ganz besonders bevorzugt eine mittlere Partikelgröße im Bereich von 0,7 bis 2,5 mm, wobei einzelne Kautschuklatex-Partikel nicht größer als 10 mm sind,
- insbesondere bevorzugt eine mittlere Partikelgröße im Bereich von 0,7 bis 2,5 mm, wobei einzelne Kautschuklatex-Partikel nicht größer als 5 mm sind.

Ganz besonders bevorzugt ist auch ein Cord wie vorstehend beschrieben oder wie vorstehend als bevorzugt bzw. als besonders bevorzugt beschrieben dadurch gekennzeichnet, dass
- die Kautschuklatex-Partikel eine mittlere Partikelgröße im Bereich von 0,3 bis 30 mm aufweisen und mindestens 50 Massenprozent, vorzugsweise mindestens 90 Massenprozent, der Kautschuklatex-Partikel eine Partikelgröße im Bereich von 0,01 mm bis 50 mm aufweisen,
- bevorzugt die Kautschuklatex-Partikel eine mittlere Partikelgröße von 0,425 bis 20 mm und mindestens 50 Massenprozent, vorzugsweise mindestens 90 Massenprozent, der Kautschuklatex-Partikel eine Partikelgröße im Bereich von 0,05 mm bis 30 mm aufweisen,
- besonders bevorzugt die Kautschuklatex-Partikel eine mittlere Partikelgröße von 0,7 bis 2,5 mm und mindestens 50 Massenprozent, vorzugsweise mindestens 90 Massenprozent, der Kautschuklatex-Partikel eine Partikelgröße im Bereich von 0,1 mm bis 10 mm oder ganz besonders bevorzugt im Bereich von 1 mm bis 6 mm aufweisen.

Im Rahmen der vorliegenden Erfindung ist die Partikelgröße eines einzigen vulkanisierten Kautschukpartikels bevorzugt die Distanz zwischen den zwei am weitesten voneinander entfernten Punkte des einen vulkanisierten Kautschukpartikels, welche mit einem Licht- oder Elektronenmikroskop aus dem Stand der Technik gemessen werden kann.

Bevorzugt ist ein Cord wie vorstehend beschrieben oder wie vorstehend als bevorzugt beschrieben, wobei
zumindest ein Filament des zweiten oder eines weiteren Garns des Cordes oder eine Mehrheit der Filamente des zweiten Garns aus Polyvinylidenfluorid bestehen
   und/oder
zumindest ein Filament des zweiten oder eines weiteren Garns des Cordes, eine Mehrheit der Filamente des zweiten oder eines weiteren Garns oder sämtliche Filamente des zweiten oder eines weiteren Garns aus ein Material, zwei Materialien, drei oder mehr Materialien umfassen ausgesucht aus der Gruppe bestehend aus Polyethylen, Aramid, Polyester und Polyamid, wie beispielsweise Polyamid 6 und Polyamid 6.6.

Bevorzugt umfassen die vorstehend beschriebenen eins, zwei Materialien, drei oder mehr Materialien auch anderen Piezo-Materialen, wie beispielsweise Solche anderen Piezo-Materialen sind beispielsweise Polyvinylidenchlorid, Blei-Zirkonat-Titanat (PZT), Bariumtitanat, Polyvinylchlorid und Polyvinylfluorid. Bevorzugt sind Blei-Zirkonat-Titanat (PZT), Bariumtitanat und Polyvinylchlorid.

Der vorstehend beschriebene Aspekt der vorliegenden Erfindung ist, dass durch die Verwendung von Filamenten aus verschiedenen Materialien die Eigenschaften des Festigkeitsträger besser an einen Reifen angepasst werden können und trotzdem PVDF erfindungsgemäß eingesetzt werden kann.

Bevorzugt ist es jedoch, ein Cord wie vorstehend beschrieben oder wie vorstehend als bevorzugt beschrieben, wobei
zumindest ein Filament des ersten Garns des Cordes, eine Mehrheit der Filamente des ersten Garns oder sämtliche Filamente des ersten Garns aus Polyvinylidenfluorid bestehen
   und
zumindest ein Filament des zweiten, eine Mehrheit der Filamente des zweiten Garns oder sämtliche Filamente des zweiten Garns aus Polyvinylidenfluorid bestehen.

Der vorstehend beschriebene Aspekt der vorliegenden Erfindung ist, dass das entstehende Signal aufgrund der Deformation des erfindungsgemäßen Cordes vergrößert wird.

Bevorzugt ist ein Cord wie vorstehend beschrieben oder wie vorstehend als bevorzugt beschrieben, wobei
das erste und/oder zweite Garn ein Garn mit einer Feinheit von 200 bis 7000 dtex ist, bevorzugt eine Feinheit von 1000 bis 3500 dtex, wobei sämtliche Filamente des ersten Garns bevorzugt aus PVDF bestehen,
und/oder
das erste und/oder zweite Garn ein Garn mit einer Feinheit von 100 bis 1000 dtex ist, bevorzugt eine Feinheit von 100 bis 500 dtex.

Der vorstehend beschriebene Aspekt der vorliegenden Erfindung ist, dass mit einem vorstehend beschriebenen erfindungsgemäßen Cord sowohl ein relativ starkes Signal aufgrund des Piezo-Effektes erreicht werden kann und gleichzeitig Reifen mit besonders hoher Uniformität hergestellt werden können.

Bevorzugt ist ein Cord wie vorstehend beschrieben oder wie vorstehend als bevorzugt beschrieben, wobei der erste und das zweite Garn sowie optional weitere Garne mit 200 bis 700 tpm, bevorzugt 300 bis 400 tpm, miteinander endverdreht sind.

Der vorstehend beschriebene Aspekt der vorliegenden Erfindung ist, dass Reifen mit besonders hoher Uniformität sowie weiteren positiven Reifeneigenschaften hergestellt werden können.

Bevorzugt ist ein Cord wie vorstehend beschrieben oder wie vorstehend als bevorzugt beschrieben, wobei der Cord zur Verwendung als Festigkeitsträger in einer Festigkeitsträgerlage geeignet ist und zumindest ein erstes Garn wie vorstehend beschrieben oder wie vorstehend als bevorzugt beschrieben umfassen und ein HybridCord ist und
- wobei das erste Garn mit einem oder zwei anderen Garnen zu dem Hybridcord endverdreht sind
   oder
- wobei zumindest ein Filament eines zweiten Garns des Cordes, eine Mehrheit der Filamente des zweiten Garns oder sämtliche Filamente des zweiten Garns aus Polyvinylidenfluorid bestehen und der erste und zweite Garn mit einem anderen Garn zu dem Hybridcord endverdreht sind.

Der vorstehend beschriebene Aspekt der vorliegenden Erfindung ist, dass Hybridcord die im Stand der Technik bekannten positiven Eigenschaften aufweisen.

Im Rahmen der vorliegenden Erfindung bezeichnet der Ausdruck "ein anderer Garn" ein Garn, welches aus einem anderen Material als das erste Garn eines erfindungsgemäßen Cordes besteht. Der Ausdruck "ein weiteres Garn" umfasst sowohl die vorstehende Bedeutung eines anderen Garns sowie Garne, welche aus dem gleichen Material wie das erste Garn eines erfindungsgemäßen Cordes bestehen.

In besonders hohem Maße bevorzugt ist Cord wie vorstehend beschrieben, umfassend zumindest ein erstes Garn und ein zweites Garn, wobei der erste und das zweite Garn miteinander endverdreht sind, dadurch gekennzeichnet, dass
- sämtliche Filamente des ersten Garns aus Polyvinylidenfluorid bestehen
   und
- die Oberfläche des Cordes zumindest teilweise von eine haftvermittelnde Schicht bestehend aus einer Dispersion bedeckt ist, wobei die haftvermittelnde Schicht aus einer Dispersion besteht und die Dispersion eine Dispersionsmatrix und eine dispergierte Phase umfasst,
wobei
- sämtliche Filamente des zweiten Garns aus Polyvinylidenfluorid bestehen,
- die haftvermittelnde Schicht eine Schichtdicke im Bereich von 100 nm bis 100 µm aufweist,
- die Dispersionsmatrix Resorcin-Formaldehyd und die dispergierte Phase aus Kautschuklatex besteht,
- der erste und das zweite Garn eine Feinheit von 1000 bis 3500 dtex aufweist,
   und
- der erste und das zweite Garn sowie optional weitere Garne mit 300 bis 400 tpm, miteinander endverdreht sind.

Die vorstehend beschriebenen vorteilhaften Aspekte eines erfindungsgemäßen Cord zur Verwendung als Festigkeitsträger in einer Festigkeitsträgerlage gelten auch für sämtliche Aspekte nachstehend beschriebene Festigkeitsträgerlagen, Fahrzeugluftreifen, Transportbänder, Luftfederbälge, Antriebsriemen und Schläuchen und die nachstehend diskutierten vorteilhaften Aspekte erfindungsgemäßer Festigkeitsträgerlagen, Fahrzeugluftreifen, Transportbänder, Luftfederbälge, Antriebsriemen und Schläuchen gelten entsprechend für sämtliche Aspekte eines erfindungsgemäßen Cord zur Verwendung als Festigkeitsträger in einer Festigkeitsträgerlage.

Die Erfindung betrifft auch eine Festigkeitsträgerlage für elastomere Erzeugnisse, bevorzugt für Fahrzeugluftreifen Transportbändern, Luftfederbälgen, Antriebsriemen und Schläuchen, besonders bevorzugt für Fahrzeugluftreifen, aufweisend zumindest einen Cord wie vorstehend beschrieben oder wie vorstehend als bevorzugt beschrieben. Bevorzugt weisen die vorstehend genannten Gegenstände jedoch mehrheitlich einen Cord wie vorstehend beschrieben oder wie vorstehend als bevorzugt beschrieben auf oder umfassen ausschließlich Corde wie vorstehend beschrieben oder wie vorstehend als bevorzugt beschrieben.

Die Erfindung betrifft auch einen Fahrzeugluftreifen, ein Transportband, ein Luftfederbalg, ein Antriebsriemen und einen Schlauch, jeweils zumindest einen Cord wie vorstehend beschriebenen oder vorstehend als bevorzugt beschriebenen aufweisend.

Bevorzugt ist ein vorstehend beschriebener Fahrzeugluftreifen, ein vorstehend beschriebenes Transportband, ein vorstehend beschriebener Luftfederbalg, ein vorstehend beschriebener Antriebsriemen oder ein vorstehend beschriebener Schlauch, zusätzlich umfassend
- eine Messeinheit zum Messen des elektrischen Signals, bevorzugt der elektrischen Spannung, zwischen dem ersten und zweiten Garn eines Cords,
- eine Übertragungseinheit zum Übertragen der gemessenen elektrischen Spannung zwischen dem ersten und zweiten Garn eines Cords
   und
- eine Steuereinheit zum Verarbeiten der gesendeten Messung der elektrischen Spannung zwischen dem ersten und zweiten Garn eines Cords.

Die vorstehend beschriebenen vorteilhaften Aspekte erfindungsgemäßer Corde, Festigkeitsträgerlagen, Fahrzeugluftreifen, Transportbänder, Luftfederbälge, Antriebsriemen und Schläuchen gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte erfindungsgemäßer Corde, Festigkeitsträgerlagen, Fahrzeugluftreifen, Transportbänder, Luftfederbälge, Antriebsriemen und Schläuchen.

Die Erfindung betrifft auch eine Verwendung eines Cords wie vorstehend beschrieben oder wie vorstehend als bevorzugt beschrieben
- zum Messen des Innenluftdrucks eines Fahrzeugluftreifens,
- zum Messen des Abriebs eines Fahrzeugluftreifens
   oder
- zum Messen des Rollwiderstandes oder des Reibwiderstandes zur Fahrbahnoberfläche eines Fahrzeugluftreifens.

Bevorzugt wird der Cords wie vorstehend beschrieben oder wie vorstehend als bevorzugt beschrieben zum Messen des Innenluftdrucks eines Fahrzeugluftreifens und/oder zum Messen des Rollwiderstandes und des Reibwiderstandes zur Fahrbahnoberfläche eines Fahrzeugluftreifens verwendet.

Wie bereits vorstehend beschrieben kann
- aus der mechanischen Spannung eines Festigkeitsträgers in einem Reifen, Rückschlüsse auf den Reifeninnendruck erhalten werden
   oder
- aus den dynamischen und entweder gedämpften oder ungedämpften Schwingungen eines Festigkeitsträgers Rückschlüsse auf den Abrieb bzw. den Reibwidersand oder den Rollwiderstand eines Fahrzeugluftreifens während des Fahrbetriebs erhalten werden.

Die vorstehend beschriebenen vorteilhaften Aspekte erfindungsgemäßer Corde, Festigkeitsträgerlagen, Fahrzeugluftreifen, Transportbänder, Luftfederbälge, Antriebsriemen und Schläuchen sowie erfindungsgemäßer Verwendungen gelten auch für sämtliche Aspekte nachstehend beschriebener Verfahren und die nachstehend diskutierten vorteilhaften Aspekte erfindungsgemäßer Verfahren gelten entsprechend für sämtliche Aspekte erfindungsgemäßer Corde, Festigkeitsträgerlagen, Fahrzeugluftreifen, Transportbänder, Luftfederbälge, Antriebsriemen und Schläuchen sowie erfindungsgemäßer Verwendungen.

Die Erfindung betrifft auch ein Verfahren zum Messen des Innenluftdrucks eines Fahrzeugluftreifens, des Abriebs eines Fahrzeugluftreifens oder zum Messen des Rollwiderstandes und des Reibwiderstandes zur Fahrbahnoberfläche eines Fahrzeugluftreifens, umfassend die folgenden Schritte:
- Bereitstellen oder Herstellen eines Fahrzeugluftreifens aufweisend einen Cord wie vorstehend beschrieben oder wie vorstehend als bevorzugt beschrieben,
- Messen der elektrischen Spannung zwischen dem ersten und zweiten Garn des Cords mittels einer Messeinheit,
- Senden der gemessenen elektrischen Spannung zwischen dem ersten und zweiten Garn mittels einer Sendeeinheit an eine Steuereinheit
   und
- Verarbeiten der gesendeten Messung der elektrischen Spannung mittels einer Steuereinheit.

Die Erfindung betrifft auch ein Verfahren zur Herstellung eines Cordes für einen Fahrzeugluftreifen oder einer gummierten Festigkeitsträgerlage oder eines Fahrzeugluftreifens:
a) Verzwirnen mindestens eines PVDF-Garnes mit einem weiteren Garn zu einem Cord,
b) Dippen des Cordes in eine wässrige Lösung umfassend Resorcin-Formaldehyd und Kautschuklatex,
c) Trocknen des gedippten Cordes,
   - sodass die Oberfläche des Cordes zumindest teilweise von eine haftvermittelnde Schicht bestehend aus einer Dispersion bedeckt ist, wobei die haftvermittelnde Schicht aus einer Dispersion besteht und die Dispersion eine Dispersionsmatrix und eine dispergierte Phase umfasst,
   - und bevorzugt sodass ein vorstehend beschriebener oder vorstehend als bevorzugt beschriebener Cord entsteht,
   und
d) optionales Weiterverarbeiten des Cordes zu einer gummierten Festigkeitsträgerlage für Fahrzeugluftreifen oder bevorzugt zu einem Fahrzeugluftreifen.
Bevorzugt ist auch ein Verfahren zur Herstellung eines Cordes für einen Fahrzeugluftreifen oder einer gummierten Festigkeitsträgerlage oder eines Fahrzeugluftreifens, wie vorstehend beschreiben, wobei das Verfahren zusätzlich mindestens einen der folgenden Schritte umfasst:
e) Einbauen einer Messeinheit zum Messen einer Spannungsänderung eines Garn aus PVDF in den Cord, in die gummierte Festigkeitsträgerlage oder den Fahrzeugluftreifen
   und/oder
f) Einbauen eine Übertragungseinheit zum Übertragen einer gemessenen Spannungsänderung in den Cord, in die gummierte Festigkeitsträgerlage oder den Fahrzeugluftreifen.

Besonders bevorzugt wird die vorstehend beschriebene Messeinheit oder die vorstehende steht beschriebene Übertragungseinheit bevorzugt aus Indien Reifen ein gedruckten Elektronikkomponenten hergestellt und somit problemlos in den Reifen integriert.
Der Vorteil des vorstehend beschriebenen Aspekts ist, dass die erfindungsgemäße Verwendung eines Cordes ohne großen Umbau des Reifens oder den Einbau unnötiger elektronischer Bestandteile erreicht werden kann.

### Figurenbeschreibung:

- Figur 1:: Schematisch dargestellter erfindungsgemäßer Cord endverdreht aus einem ersten Garn aus PVDF und einem zweiten Garn aus Polyester;
- Figur 2:: Schematisch dargestellter erfindungsgemäßer Cord bestehend aus zwei endverdrehten Hybridgarnen, wobei jeder Hybridgarn aus PVDF-Filamenten und aus Polyester-Filamenten besteht;
- Figur 3:: Schematisch dargestellter Querschnitt eines erfindungsgemäßen Cordes mit haftvermittelnder Schicht bestehend aus einer Dispersion, wobei die Querschnittebene gemäß dem Schnitt A-A in Figur 1 verläuft;
- Figur 4:: Schematisch dargestellter Querschnitt eines erfindungsgemäßen Cordes mit haftvermittelnder Schicht bestehend aus einer Dispersion umgeben von einer Gummierungslage, wobei die Querschnittebene gemäß dem Schnitt B-B in Figur 2 verläuft;
- Figur 5:: Schematisch dargestellte erfindungsgemäße Verstärkungslage umfassend sowohl einen erfindungsgemäßen Cord bestehend aus zwei endverdrehten Garnen als auch zwei weitere Corde;
- Figur 6:: Ansicht auf die Verformung eines erfindungsgemäßen Cordes in einem Reifen während des Fahrbetriebs.

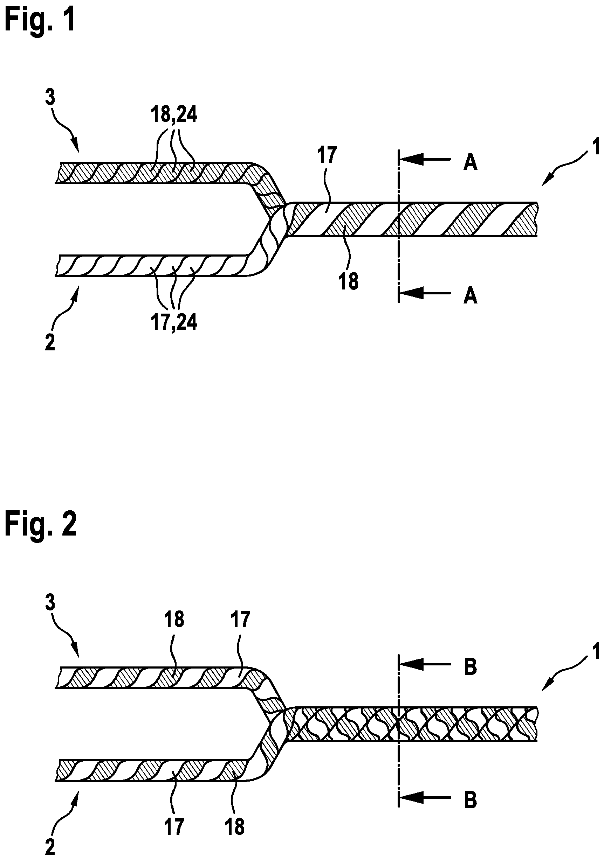

Figur 1 zeigt eine schematische Darstellung eines erfindungsgemäßen Cordes 1 bestehend aus einem ersten Garn 2 aus PVDF 17 und einem zweiten Garn 3 aus Polyester 18. Das erste Garn 2 besteht aus mehreren Filamenten 24, welche alle aus PVDF 17 bestehen. Das zweite Garn 3 besteht aus mehreren Filamenten 24, welche alle aus Polyester 18 bestehen. Der erfindungsgemäßer Cord 1, kann dabei aus zwei Garnen, wie er in Figur 1 dargestellt ist oder aus 3 Garnen , wie er in Figur 3 dargestellt ist, endverdreht sein. Der Schnitte A-A dient nur der Veranschaulichung, um zu zeigen wie die Querschnittsebene in Figur 3 verläuft, jedoch nicht um auszudrücken, dass der Cord 1 in Figur 1 der gleiche ist, welcher in Figur 3 dargestellt ist.

Figur 2 zeigt eine schematische Darstellung eines erfindungsgemäßen Cordes 1 bestehend aus einem ersten Garn 2 und einem zweiten Garn 3. Das erste Garn 2 und das zweite Garn 3 bestehen aus unterschiedlichen Filamenten 24, welche entweder aus PVDF 17 oder aus Polyester 18 bestehen. Der erfindungsgemäßer Cord 1, kann dabei aus zwei Garnen, wie er in Figur 2 dargestellt ist oder aus drei Garnen, wie er in Figur 4 dargestellt ist, endverdreht sein. Der Schnitte B-B dient nur der Veranschaulichung, um zu zeigen wie die Querschnittsebene in Figur 4 verläuft, jedoch nicht um auszudrücken, dass der Cord 1 in Figur 2 der gleiche ist, welcher in Figur 4 dargestellt ist.

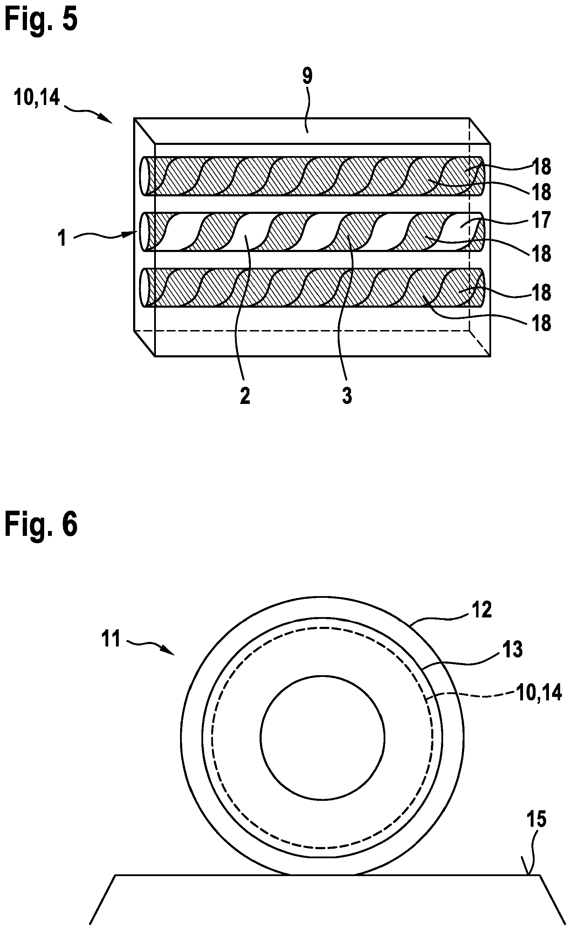

Figur 3 zeigt eine schematische Darstellung eines Querschnittes durch einen erfindungsgemäßen Cord 1, wobei die Querschnittsebene wie in Figur 1 gemäß dem Schnitt A-A angedeutet, verläuft. Im Gegensatz zu dem Cord 1 wie in Figur 1 dargestellt, ist der erfindungsgemäße Cord 1 wie in Figur 3 dargestellt aus einem ersten Garn 2, einem zweiten Garn 3 und einem weiteren Garn 16 endverdreht. In Figur 3 besteht das erste Garn 2 aus sieben Filamenten 24, wobei sämtliche sieben Filamenten 24 aus PVDF 17 bestehen und die Oberfläche 19 der Filamente 24 des ersten Garns 2 aufweisen. In Figur 3 besteht das zweite Garn 3 aus sieben Filamenten 24, wobei sämtliche sieben Filamenten 24 aus Polyester 18 bestehen und die Oberfläche 20 der Filamente 24 des zweiten Garns 3 aufweisen. In Figur 3 besteht das weitere Garn 16 aus sieben Filamenten 24, wobei sämtliche sieben Filamenten 24 aus PVDF 17 bestehen und die Oberfläche 21 der Filamente 24 des weiteren Garns 16 aufweisen. Die drei Garne 2, 3, 16 sind in Figur 3 von eine haftvermittelnden Schicht 5 umgeben, wobei die haftvermittelnde Schicht 5 eine Dispersion ist und aus einer Dispersionsmatrix 6 umfassend Resorcin-Formaldehyd und einer dispergierten Phase 7 bestehend aus Naturlatex-Partikeln besteht. In Figur 3 ist gut zu sehen, dass die haftvermittelnde Schicht 5 mittels des Dip-Verfahrens, wie beispielsweise eines erfindungsgemäßen Verfahrens, nicht auf optimale Weise gleichmäßig verteilt werden kann. Insbesondere können auch nach dem Dip-Verfahren immer noch zu freiliegenden Oberflächen 23 auf den verschiedenen Oberflächen 19, 20, 21 oder zwischen den einzelnen Filamenten 24 eines Garnes 2, 3, 16 vorliegen. Bevorzugt ist es, wenn zumindest die Hälfte der Oberflächen 19, 20, 21 oder zumindest die Hälfte der mittleren äußeren Oberfläche 22 von der haftvermittelnden Schicht 5 bedeckt wird. Besonders bevorzugt ist es, wenn zumindest 90 % der Oberflächen 19, 20, 21 oder zumindest 90 % der mittleren äußeren Oberfläche 22 von der haftvermittelnden Schicht 5 bedeckt wird. Dies führt zu einer verbesserten Haftung zwischen einem erfindungsgemäßen Cord 1 und einer Gummierungslage, wie beispielsweise die Gummierungslage 9 einer Festigkeitsträgerlage 10 für elastomere Erzeugnisse in Figur 5.
Zudem ist in Figur 3 die mittlere äußere Oberfläche 22 sämtlicher Garne 2, 3, 16 des in Figur 3 gezeigten erfindungsgemäßen Cordes 1 dargestellt.

Figur 4 zeigt eine schematische Darstellung eines Querschnittes durch einen erfindungsgemäßen Cord 1, wobei die Querschnittsebene wie in Figur 2 gemäß dem Schnitt B-B angedeutet, verläuft. Im Gegensatz zu dem Cord 1 wie in Figur 2 dargestellt, ist der erfindungsgemäße Cord 1 wie in Figur 4 dargestellt aus einem ersten Garn 2, einem zweiten Garn 3 und einem weiteren Garn 16 endverdreht. In Figur 4 besteht das erste Garn 2 aus sieben Filamenten 24, wobei die sieben Filamenten 24 aus PVDF 17 oder aus Polyester 18 bestehen und die Oberfläche 19 der Filamente 24 des ersten Garns 2 aufweisen. In Figur 4 besteht das zweite Garn 3 aus sieben Filamenten 24, wobei die sieben Filamenten 24 aus PVDF 17 oder aus Polyester 18 bestehen und die Oberfläche 20 der Filamente 24 des zweiten Garns 3 aufweisen. In Figur 4 besteht das weitere Garn 16 aus sieben Filamenten 24, wobei die sieben Filamenten 24 aus PVDF 17 oder aus Polyester 18 bestehen und die Oberfläche 21 der Filamente 24 des weiteren Garns 16 aufweisen. Die drei Garne 2, 3, 16 sind in Figur 4 von eine haftvermittelnden Schicht 5 umgeben, wobei die haftvermittelnde Schicht 5 eine Dispersion ist und aus einer Dispersionsmatrix 6 umfassend Resorcin-Formaldehyd und eine dispergierte Phase 7 bestehend aus Naturlatex-Partikeln besteht. In Figur 4 ist gut zu sehen, dass die haftvermittelnde Schicht 5 mittels des Dip-Verfahrens, wie beispielsweise eines erfindungsgemäßen Verfahrens, nicht auf optimale Weise gleichmäßig verteilt werden kann. Insbesondere können auch nach dem Dip-Verfahren immer noch zu freiliegenden Oberflächen 23 auf den verschiedenen Oberflächen 19, 20, 21 oder zwischen den einzelnen Filamenten 24 eines Garnes 2, 3, 16 vorliegen. Bevorzugt ist es, wenn zumindest die Hälfte der Oberflächen 19, 20, 21 oder zumindest die Hälfte der mittleren äußeren Oberfläche 22 von der haftvermittelnden Schicht 5 bedeckt wird. Besonders bevorzugt ist es, wenn zumindest 90 % der Oberflächen 19, 20, 21 oder zumindest 90 % der mittleren äußeren Oberfläche 22 von der haftvermittelnden Schicht 5 bedeckt wird. Dies führt zu einer verbesserten Haftung zwischen einem erfindungsgemäßen Cord 1 und einer Gummierungslage, wie beispielsweise die Gummierungslage 9 einer Festigkeitsträgerlage 10 für elastomere Erzeugnisse in Figur 5.
Zudem ist in Figur 4 die mittlere äußere Oberfläche 22 sämtlicher Garne 2, 3, 16 des in Figur 4 gezeigten erfindungsgemäßen Cordes 1 dargestellt.

Figur 5 zeigt einen Ausschnitt einer erfindungsgemäßen Festigkeitsträgerlage 10 für elastomere Erzeugnisse, welche eine erfindungsgemäße Festigkeitsträgerlage 14 mit einem erfindungsgemäßen Cord 1 darstellt. In der Festigkeitsträgerlage 10, 14 befinden sich drei Corde in einer Gummierungslage 9, wobei der mittlere der 3 Corde ein erfindungsgemäßer Cord 1 ist. Der erfindungsgemäße Cord 1 ist mit einem ersten Garn 2 und einem zweiten Garn 3 endverdreht, wobei der erste Garn 2 aus Filamenten aus PVDF 17 und der zweite Garn 3 aus Filamenten aus Polyester 18 besteht. Die beiden anderen gezeigten Corde bestehen ausschließlich aus Filamenten aus Polyester 18.

Figur 6 zeigt einen erfindungsgemäßen Fahrzeugluftreifen 11 auf einer Fahrbahnoberfläche 15. Der erfindungsgemäße Fahrzeugluftreifen 11 umfasst eine Lauffläche 12, eine Gürtellage 13 und eine Festigkeitsträgerlage 10, 14. in Figur 6 ist die Verformung an der Aufstandsfläche des Fahrzeugluftreifens 11 zu sehen, welche durch das Gewicht des Fahrzeugluftreifens 11 in Richtung der Fahrbahnoberfläche 15 hervorgerufen wird. Diese Verformung ist ein Grund, eine Möglichkeit, wie eine Deformation des erfindungsgemäßen Cordes entstehen kann. Der Übersicht halber sind in Figur keine Messeinheit zum Messen des elektrischen Signals, keine Übertragungseinheit zum Übertragen der gemessenen elektrischen Spannung zwischen dem ersten und zweiten und keine Steuereinheit zum Verarbeiten der gesendeten Messung der elektrischen Spannung zwischen dem ersten und zweiten Garn dargestellt.

### Bezugszeichenliste:

- 1: erfindungsgemäßer Cord
- 2: erster Garn
- 3: zweiter Garn
- 4: Oberfläche des Cords
- 5: haftvermittelnde Schicht
- 6: Dispersionsmatrix
- 7: dispergierte Phase, Naturlatex-Partikel
- 8: Schichtdicke der haftvermittelnden Schicht
- 9: Gummierungslage
- 10: Festigkeitsträgerlage für elastomere Erzeugnisse
- 11: Fahrzeugluftreifen
- 12: Lauffläche des Fahrzeugluftreifens
- 13: Gürtellage; Gürtelbandage
- 14: Festigkeitsträgerlage mit einem erfindungsgemäßen Cord
- 15: Fahrbahnoberfläche
- 16: weiterer Garn
- 17: PVDF; Polyvinylidenfluorid
- 18: Polyester
- 19: Oberfläche des ersten Garns
- 20: Oberfläche des zweiten Garns
- 21: Oberfläche des weiteren Garns
- 22: mittlere äußere Oberfläche des erfindungsgemäßen Cordes
- 23: freiliegende Oberfläche
- 24: Filament

## Patentansprüche

1. Cord zur Verwendung als Festigkeitsträger in einer Festigkeitsträgerlage (14), insbesondere einer Gürtelbandage (13) und/oder Karkasse eines Fahrzeugluftreifens (11), umfassend zumindest ein erstes Garn (2) und ein zweites Garn (3), wobei der erste und das zweite Garn (2, 3) miteinander endverdreht sind,
**dadurch gekennzeichnet, dass**
- zumindest ein Filament (24) des ersten Garns (2) des Cordes (1), eine Mehrheit der Filamente (24) des ersten Garns (2) oder sämtliche Filamente (24) des ersten Garns (2) aus Polyvinylidenfluorid (17) bestehen
und
- die Oberfläche (19, 20) zumindest des ersten Garns (2) und des zweiten Garns (3) zumindest teilweise von eine haftvermittelnde Schicht (5) bestehend aus einer Dispersion bedeckt ist, wobei die Dispersion mindestens eine Dispersionsmatrix (6) und mindestens eine dispergierte Phase (7) umfasst.

2. Cord nach Anspruch 1, wobei die haftvermittelnde Schicht (5)
- eine Schichtdicke im Bereich von 10 nm bis 1 mm aufweist, bevorzugt im Bereich von 100 nm bis 100 µm, besonders bevorzugt im Bereich von 1 µm bis 10 µm und/oder
- zumindest die Hälfte der Oberfläche (19, 20) des ersten und zweiten Garns (2, 3) bedeckt, bevorzugt zumindest 90 % der Oberfläche (19, 20) des ersten und zweiten Garns (2, 3).

3. Cord nach einem der vorangehenden Ansprüche, wobei die Dispersionsmatrix (6) Resorcin-Formaldehyd und/oder die dispergierte Phase (7) Kautschuklatex umfasst.

4. Cord nach einem der vorangehenden Ansprüche, wobei
zumindest ein Filament (24) des zweiten oder eines weiteren Garns (3, 16) des Cordes (1) oder eine Mehrheit der Filamente (24) des zweiten Garns (2) aus Polyvinylidenfluorid (17) bestehen
und/oder
zumindest ein Filament (24) des zweiten oder eines weiteren Garns (3, 16) des Cordes (1), eine Mehrheit der Filamente (24) des zweiten oder eines weiteren Garns (3, 16) oder sämtliche Filamente (24) des zweiten oder eines weiteren Garns (3, 16) aus ein Material, zwei Materialien, drei oder mehr Materialien umfassen ausgesucht aus der Gruppe bestehend aus Polyethylen, Aramid, Polyamid und Polyester.

5. Cord nach einem der vorangehenden Ansprüche, wobei
der erste und/oder zweite Garn (2, 3) ein Garn mit einer Feinheit von 200 bis 7000 dtex ist, bevorzugt eine Feinheit von 1000 bis 3500 dtex,
und/oder
der erste und/oder zweite Garn (2, 3) ein Garn mit einer Feinheit von 100 bis 1000 dtex ist, bevorzugt eine Feinheit von 100 bis 500 dtex.

6. Cord nach einem der vorangehenden Ansprüche, wobei der erste und das zweite Garn (2, 3) sowie optional weitere Garn (16) mit 200 bis 700 tpm, bevorzugt mit 300 bis 400 tpm, miteinander endverdreht sind.

7. Cord nach einem der vorangehenden Ansprüche, wobei der Cord (1) ein HybridCord ist und das zweite Garn (3) oder ein weiterer Garn (16) kein Polyvinylidenfluorid (17) umfasst.

8. Cord zur Verwendung als Festigkeitsträger in einer Festigkeitsträgerlage (14), umfassend zumindest ein erstes Garn (2) wie in einem der vorangehenden Ansprüche 1-7 definiert, wobei der Cord (1) ein HybridCord ist und
- wobei das erste Garn (2) mit einem oder zwei anderen Garnen (3, 16) zu dem Hybridcord endverdreht sind
oder
- wobei zumindest ein Filament (24) eines zweiten Garns (3) des Cordes (1), eine Mehrheit der Filamente (24) des zweiten Garns (3) oder sämtliche Filamente (24) des zweiten Garns (3) aus Polyvinylidenfluorid (17) bestehen und der erste und zweite Garn (2, 3) mit einem anderen Cord zu dem Hybridcord endverdreht sind.

9. Festigkeitsträgerlage für elastomere Erzeugnisse, bevorzugt für Fahrzeugluftreifen (11) Transportbändern, Luftfederbälgen, Antriebsriemen und Schläuchen, besonders bevorzugt für Fahrzeugluftreifen (11), aufweisend zumindest einen Cord (1) nach einem der Ansprüche 1 bis 8.

10. Verwendung eines Cords (1) nach einem der Ansprüchen 1 bis 8 zum Messen des Innenluftdrucks eines Fahrzeugluftreifens (11), des Abriebs eines Fahrzeugluftreifens (11) oder zum Messen des Rollwiderstandes und des Reibwiderstandes zur Fahrbahnoberfläche (15) eines Fahrzeugluftreifens (11).

11. Fahrzeugluftreifen (11), Transportbänder, Luftfederbälge, Antriebsriemen und Schläuche aufweisend zumindest einen Cord (1) nach einem der Ansprüchen 1 bis 8.

12. Fahrzeugluftreifen nach Anspruch 11, zusätzlich umfassend
- eine Messeinheit zum Messen des elektrischen Signals, bevorzugt der elektrischen Spannung, zwischen dem ersten und zweiten Garn (2, 3) eines Cords (1),
- eine Übertragungseinheit zum Übertragen der gemessenen elektrischen Spannung zwischen dem ersten und zweiten Garn (2, 3) eines Cords (1),
- eine Steuereinheit zum Verarbeiten der gesendeten Messung der elektrischen Spannung zwischen dem ersten und zweiten Garn (2, 3) eines Cords (1).

13. Verfahren zur Herstellung eines Cordes (1) für einen Fahrzeugluftreifen oder einer gummierten Festigkeitsträgerlage (14) oder eines Fahrzeugluftreifens (11):
a) Verzwirnen mindestens eines PVDF-Garnes (2, 3) mit einem weiteren Garn (16) zu einem Cord,
b) Dippen des Cordes in eine wässrige Lösung umfassend Resorcin-Formaldehyd und Kautschuklatex,
c) Trocknen des gedippten Cordes (1), sodass die Oberfläche des Cordes zumindest teilweise von eine haftvermittelnde Schicht (5) bestehend aus einer Dispersion bedeckt ist, wobei die Dispersion eine Dispersionsmatrix (6) und eine dispergierte Phase (7) umfasst,
d) optionales Weiterverarbeiten des Cordes (1) zu einer gummierten Festigkeitsträgerlage (14) für Fahrzeugluftreifen (11) oder bevorzugt zu einem Fahrzeugluftreifen (11).

## Claims

1. Cord for use as a reinforcing element in a reinforcing layer (14), in particular of a belt bandage (13) and/or carcass of a pneumatic vehicle tyre (11), comprising at least a first yarn (2) and a second yarn (3), wherein the first and second yarns (2, 3) are twisted together at the end,
**characterized in that**
- at least one filament (24) of the first yarn (2) of the cord (1), a plurality of the filaments (24) of the first yarn (2) or all of the filaments (24) of the first yarn (2) consist of polyvinylidene fluoride (17)
and
- the surface (19, 20) at least of the first yarn (2) and of the second yarn (3) is at least partially covered by an adhesion-promoting layer (5) consisting of a dispersion, wherein the dispersion comprises at least one dispersion matrix (6) and at least one dispersed phase (7).

2. Cord according to Claim 1, wherein the adhesion-promoting layer (5)
- has a layer thickness in the range from 10 nm to 1 mm, preferably in the range from 100 nm to 100 µm, particularly preferably in the range from 1 µm to 10 µm
and/or
- at least half of the surface (19, 20) of the first and second yarns (2, 3) is covered, preferably at least 90% of the surface (19, 20) of the first and second yarns (2, 3).

3. Cord according to one of the preceding claims, wherein the dispersion matrix (6) comprises resorcinol-formaldehyde and/or the dispersed phase (7) comprises rubber latex.

4. Cord according to one of the preceding claims, wherein at least one filament (24) of the second or a further yarn (3, 16) of the cord (1) or a plurality of the filaments (24) of the second yarn (2) consist of polyvinylidene flouride (17)
and/or
at least one filament (24) of the second or a further yarn (3, 16) of the cord (1), a plurality of the filaments (24) of the second or a further yarn (3, 16) or all of the filaments (24) of the second or a further yarn (3, 16) comprise one material, two materials, three or more materials selected from the group consisting of polyethylene, aramid, polyamide and polyester.

5. Cord according to one of the preceding claims,
wherein
the first and/or second yarn (2, 3) is a yarn with a fineness of 200 to 7000 dtex, preferably a fineness of 1000 to 3500 dtex,
and/or
the first and/or second yarn (2, 3) is a yarn with a fineness of 100 to 1000 dtex, preferably a fineness of 100 to 500 dtex.

6. Cord according to one of the preceding claims, wherein the first and the second yarns (2, 3) and optionally a further yarn (16) are twisted together at the end with 200 to 700 tpm, preferably with 300 to 400 tpm.

7. Cord according to one of the preceding claims, wherein the cord (1) is a hybrid cord and the second yarn (3) or a further yarn (16) does not comprise polyvinylidene fluoride (17).

8. Cord for use as a reinforcing element in a reinforcing layer (14), comprising at least a first yarn (2) as defined in one of the preceding Claims 1-7, wherein the cord (1) is a hybrid cord and
- wherein the first cord (2) is twisted at the end with one or two other yarns (3, 6) to form the hybrid cord
or
- wherein at least one filament (24) of a second yarn (3) of the cord (1), a plurality of the filaments (24) of the second yarn (3) or all of the filaments (24) of the second yarn (3) consist of polyvinylidene flouride (17) and the first and second yarns (2, 3) are twisted at the end with another cord to form the hybrid cord.

9. Reinforcing layer for elastomeric products, preferably for pneumatic vehicle tyres (11), conveyor belts, air spring lobes, drive belts and hoses, particularly preferably for pneumatic vehicle tyres (11), having at least one cord (1) according to one of Claims 1 to 8.

10. Use of a cord (1) according to one of Claims 1 to 8 for measuring the internal air pressure of a pneumatic vehicle tyre (11), the abrasion of a pneumatic vehicle tyre (11) or for measuring the rolling resistance and the frictional resistance with respect to the carriageway surface (15) of a pneumatic vehicle tyre (11).

11. Pneumatic vehicle tyres (11), conveyor belts, air spring lobes, drive belts and hoses having at least one cord (1) according to one of Claims 1 to 8.

12. Pneumatic vehicle tyre according to Claim 11, additionally comprising
- a measuring unit for measuring the electrical signal, preferably the electrical voltage, between the first and second yarns (2, 3) of a cord (1),
- a transmission unit for transmitting the measured electrical voltage between the first and second yarns (2, 3) of a cord (1),
- a control unit for processing the transmitted measurement of the electrical voltage between the first and second yarns (2, 3) of a cord (1).

13. Method for producing a cord (1) for a pneumatic vehicle tyre or a rubberized reinforcing layer (14) or a pneumatic vehicle tyre (11):
a) twisting together at least one PVDF yarn (2, 3) with a further yarn (16) to form a cord,
b) dipping the cord into an aqueous solution comprising resorcinol-formaldehyde and rubber latex,
c) drying the dipped cord (1), so that the surface of the cord is at least partially covered by an adhesion-promoting layer (5) consisting of a dispersion, wherein the dispersion comprises a dispersion matrix (6) and a dispersed phase (7),
d) optionally further processing the cord (1) to form a rubberized reinforcing layer (14) for pneumatic vehicle tyres (11) or preferably to form a pneumatic vehicle tyre (11).

## Revendications

1. Cordon destiné à une utilisation en tant que support de résistance dans une couche de support de résistance (14), notamment un bandage de ceinture (13) et/ou une carcasse d'un pneu de véhicule (11), comprenant au moins un premier fil (2) et un deuxième fil (3), le premier et le deuxième fil (2, 3) étant torsadés à l'extrémité l'un avec l'autre,
**caractérisé en ce que**
- au moins un filament (24) du premier fil (2) du cordon (1), une pluralité des filaments (24) du premier fil (2) ou tous les filaments (24) du premier fil (2) sont constitués par du polyfluorure de vinylidène (17), et
- la surface (19, 20) au moins du premier fil (2) et du deuxième fil (3) est recouverte au moins en partie par une couche de promoteur d'adhésion (5) constituée par une dispersion, la dispersion comprenant au moins une matrice de dispersion (6) et au moins une phase dispersée (7).

2. Cordon selon la revendication 1, dans lequel la couche de promoteur d'adhésion (5)
- présente une épaisseur de couche dans la plage allant de 10 nm à 1 mm, de préférence dans la plage allant de 100 nm à 100 µm, de manière particulièrement préférée dans la plage allant de 1 µm à 10 µm,
et/ou
- recouvre au moins la moitié de la surface (19, 20) du premier et deuxième fil (2, 3), de préférence au moins 90 % de la surface (19, 20) du premier et deuxième fil (2, 3).

3. Cordon selon l'une quelconque des revendications précédentes, dans lequel la matrice de dispersion (6) comprend du résorcine-formaldéhyde et/ou la phase dispersée (7) comprend du latex de caoutchouc.

4. Cordon selon l'une quelconque des revendications précédentes, dans lequel
au moins un filament (24) du deuxième fil ou d'un fil supplémentaire (3, 16) du cordon (1) ou une pluralité des filaments (24) du deuxième fil (2) sont constitués par du polyfluorure de vinylidène (17),
et/ou
au moins un filament (24) du deuxième fil ou d'un fil supplémentaire (3, 16) du cordon (1), une pluralité des filaments (24) du deuxième fil ou d'un fil supplémentaire (3, 16) ou tous les filaments (24) du deuxième fil ou d'un fil supplémentaire (3, 16) comprennent un matériau, deux matériaux, trois ou plus de trois matériaux choisis dans le groupe constitué par le polyéthylène, l'aramide, le polyamide et le polyester.

5. Cordon selon l'une quelconque des revendications précédentes, dans lequel
le premier et/ou deuxième fil (2, 3) est un fil ayant un titre de 200 à 7 000 dtex, de préférence un titre de 1 000 à 3 500 dtex,
et/ou
le premier et/ou deuxième fil (2, 3) est un fil ayant un titre de 100 à 1 000 dtex, de préférence un titre de 100 à 500 dtex.

6. Cordon selon l'une quelconque des revendications précédentes, dans lequel le premier et le deuxième fil (2, 3), ainsi qu'éventuellement un fil supplémentaire (16), sont torsadés à l'extrémité les uns avec les autres à 200 à 700 tpm, de préférence à 300 à 400 tpm.

7. Cordon selon l'une quelconque des revendications précédentes, dans lequel le cordon (1) est un cordon hybride et le deuxième fil (3) ou un fil supplémentaire (16) ne comprend pas de polyfluorure de vinylidène (17) .

8. Cordon destiné à une utilisation en tant que support de résistance dans une couche de support de résistance (14), comprenant au moins un premier fil (2) tel que défini dans l'une quelconque des revendications 1 à 7 précédentes, le cordon (1) étant un cordon hybride, et
- le premier fil (2) étant torsadé à l'extrémité avec un ou deux autres fils (3, 16) pour former le cordon hybride,
ou
- au moins un filament (24) d'un deuxième fil (3) du cordon (1), une pluralité des filaments (24) du deuxième fil (3) ou tous les filaments (24) du deuxième fil (3) étant constitués par du polyfluorure de vinylidène (17), et le premier et deuxième fil (2, 3) étant torsadés à l'extrémité avec un autre cordon pour former le cordon hybride.

9. Couche de support de résistance pour articles élastomères, de préférence pour pneus de véhicule (11), bandes de transport, soufflets de suspension pneumatiques, courroies d'entraînement et tuyaux, de manière particulièrement préférée pour pneus de véhicule (11), comprenant au moins un cordon (1) selon l'une quelconque des revendications 1 à 8.

10. Utilisation d'un cordon (1) selon l'une quelconque des revendications 1 à 8 pour la mesure de la pression d'air interne d'un pneu de véhicule (11), de l'abrasion d'un pneu de véhicule (11) ou pour la mesure de la résistance au roulement et de la résistance au frottement sur la surface de la route (15) d'un pneu de véhicule (11).

11. Pneus de véhicule (11), bandes de transport, soufflets de suspension pneumatiques, courroies d'entraînement et tuyaux comprenant au moins un cordon (1) selon l'une quelconque des revendications 1 à 8.

12. Pneu de véhicule selon la revendication 11, comprenant en outre :
- une unité de mesure pour la mesure du signal électrique, de préférence de la tension électrique, entre le premier et le deuxième fil (2, 3) d'un cordon (1),
- une unité de transfert pour le transfert de la tension électrique mesurée entre le premier et le deuxième fil (2, 3) d'un cordon (1),
- une unité de commande pour le traitement de la mesure envoyée de la tension électrique entre le premier et le deuxième fil (2, 3) d'un cordon (1).

13. Procédé de fabrication d'un cordon (1) pour un pneu de véhicule ou d'une couche de support de résistance caoutchoutée (14) ou d'un pneu de véhicule (11) :
a) la torsion d'au moins un fil de PVDF (2, 3) avec un fil supplémentaire (16) pour former un cordon,
b) le trempage du cordon dans une solution aqueuse comprenant du résorcine-formaldéhyde et du latex de caoutchouc,
c) le séchage du cordon trempé (1), de telle sorte que la surface du cordon soit recouverte au moins en partie par une couche de promoteur d'adhésion (15) constituée par une dispersion, la dispersion comprenant une matrice de dispersion (6) et une phase dispersée (7),
d) éventuellement le traitement supplémentaire du cordon (1) pour former une couche de support de résistance caoutchoutée (14) pour pneu de véhicule (11) ou de préférence pour former un pneu de véhicule (11).
